(19) Europäisches Patentamt
European Patent Office
Office européen des brevets

(11) **EP 2 734 664 B1**

(12) **EUROPEAN PATENT SPECIFICATION**


(45) Date of publication and mention of the grant of the patent:
**18.05.2016 Bulletin 2016/20**

(21) Application number: **12740561.1**

(22) Date of filing: **20.07.2012**

(51) Int Cl.:
***C03C 25/26*** *(2006.01)*
***C03C 25/32*** *(2006.01)*
***C08K 7/04*** *(2006.01)*
***C08L 5/00*** *(2006.01)*
***C08L 79/02*** *(2006.01)*
***C08J 5/24*** *(2006.01)*
***C09J 103/02*** *(2006.01)*
***D04H 1/64*** *(2012.01)*
***C08L 77/06*** *(2006.01)*

(86) International application number:
**PCT/EP2012/064290**

(87) International publication number:
**WO 2013/014076 (31.01.2013 Gazette 2013/05)**


(54) **UREA-MODIFIED BINDER FOR MINERAL FIBRES**

HARNSTOFF-MODIFIZIERTES BINDEMITTEL FÜR MINERALFASERN

LIANT MODIFIÉ PAR L'ADDITION D'URÉE POUR LES FIBRES MINÉRALES


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2011 EP 11175019**
**16.08.2011 US 201161524149 P**

(43) Date of publication of application:
**28.05.2014 Bulletin 2014/22**



(73) Proprietor: **Rockwool International A/S**
**2640 Hedehusene (DK)**

(72) Inventors:
- **NAERUM, Lars**
**DK-2900 Hellerup (DK)**
- **NISSEN, Povl**
**DK-3650 Olstykke (DK)**
- **HANSEN, Erling, Lennart**
**DK-2830 Virum (DK)**

(74) Representative: **Letzelter, Felix Phillip**
**Meissner, Bolte & Partner GbR**
**Widenmayerstraße 47**
**80538 München (DE)**



(56) References cited:
**EP-A1- 1 170 265**
**EP-A1- 1 382 642**
**EP-A1- 2 093 266**
**EP-A1- 2 230 222**
**WO-A1-2008/023032**
**WO-A1-2011/028964**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 2 734 664 B1

## Description

### Field of the Invention

The present invention relates to a high-yield aqueous binder for mineral fibre products, a method of producing a bonded mineral fibre product using said binder, and a mineral fibre product comprising mineral fibres in contact with the cured binder.

### Background of the Invention

Mineral fibre products generally comprise man-made vitreous fibres (MMVF) such as, e.g., glass fibres, ceramic fibres, basalt fibres, slag wool, mineral wool and stone wool, which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol-formaldehyde binders are the addition/- elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties in terms of curing speed and curing density. WO 2008/023032 discloses urea-modified binders of that type which provide mineral wool products having reduced moisture take-up.

Since some of the starting materials used in the production of these binders are rather expensive chemicals, several of the above-mentioned patent publications suggest the use of cheaper carbohydrates, for instance, starch or sugar, as additives, extenders or as reactive components of the binder system. However, the use of carbohydrates in mineral wool binder systems is often accompanied by impaired fire characteristics. For instance, during production of high-density mineral fibre products in production lines with limited cooling zone capacity a phenomenon which has been described as punking may occur. Punking is a term of art used to denote the comparatively rapid flameless oxidation of the binder with a concomitant self-reinforcing generation of heat caused by an exothermic process initiated by hot spots (melt splashes or glowing coke pieces). Odors and fumes given off by such thermal decompositon are offensive, potentially hazardous and are capable of discoloring and staining adjacent materials. Furthermore, punking may be associated with exothermic reactions which increase temperatures through the thickness of the insulation causing a fusing or devitrification of the mineral fibres and eventually creating a fire hazard. In the worst case, punking causes fires in the stacked pallets stored in warehouses or during transportation.

### Summary of the Invention

Accordingly, it was an object of the present invention to provide an aqueous binder composition which is particularly suitable for bonding mineral fibres and is economically produced in,high yield.

A further object of the present invention was to provide a mineral fibre product bonded with such a binder composition and having high fire resistance as well as improved anti-punk properties.

In accordance with a first aspect of the present invention, there is provided an aqueous binder composition for mineral fibres comprising:

(1) a water-soluble binder component obtainable by reacting at least one alkanolamine with at least one polycarboxylic acid or anhydride and, optionally, treating the reaction product with a base;
(2) a sugar component; and
(3) urea

the proportion of components (1), (2) and (3) being within the range of 10 to 80 wt.% of (1), 15 to 80 wt.% of (2), and 5 to 60 wt.% of (3), based on the solids content of components (1), (2) and (3) as measured after heat treatment for 1 hour at 200°C.

In accordance with a second aspect of the present invention, there is provided a method of producing a bonded mineral fibre product which comprises the steps of contacting the mineral fibres or mineral fibre product with an aqueous binder composition as defined above, and curing the binder composition.

In accordance with a third aspect of the present invention, there is provided a mineral fibre product comprising mineral fibres in contact with the cured binder composition defined above.

The present inventors have surprisingly found that the reaction yield in the production of a binder system comprising an alkanolamine / polycarboxylic reaction product and urea can be substantially improved by using a sugar component as a third binder component. This allows the production of bonded mineral fibre products using less binder, thereby improving both efficiency and economy of commercial production.

Furthermore, it has been found that a ternary binder system of alkanolamine / polycarboxylic reaction product, sugar component and urea provides a bonded mineral fibre product exhibiting improved fire resistance and anti-punk properties.

**Description of the Preferred Embodiments**

The aqueous binder composition according to the present invention comprises:

(1) a water-soluble binder component obtainable by reacting at least one alkanolamine with at least one polycarboxylic acid or anhydride and, optionally, treating the reaction product with a base;
(2) a sugar component; and
(3) urea

the proportion of components (1), (2) and (3) being within the range of 10 to 80 wt.% of (1), 15 to 80 wt.% of (2), and 5 to 60 wt.% of (3), based on the solids content of components (1), (2) and (3) as measured after heat treatment for 1 hour at 200°C.

Preferably, components (1), (2) and (3) are used in proportions such that the minimum content of component (1) is 20 wt.%, 25 wt.% or 30 wt% and the maximum content is 40 wt., 50 wt.%, 60 wt.% or 70 wt.%; the minimum content of component (2) is 20 wt.%, 30 wt.% or 40 wt.% and the maximum content is 50 wt.%, 60 wt.% or 70 wt.%; and the minimum content of component (3) is 10 wt.%, 15 wt.% or 25 wt.% and the maximum content is 30 wt.%, 35 wt.% or 40 wt.%; all percentages based on the solids content of components (1), (2) and (3) as measured after heat treatment for 1 hour at 200°C.

<u>Binder Component (1)</u>

Binder component (1) of the aqueous binder composition according to the present invention comprises the water-soluble reaction product of an alkanolamine with a carboxylic acid or anhydride.

Alkanolamines

Preferred alkanolamines for use in the preparation of binder component are alkanolamines having at least two hydroxy groups such as, for instance, alkanolamines represented by the formula

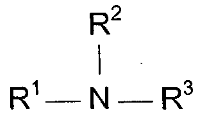

wherein $R^1$ is hydrogen, a $C_{1-10}$ alkyl group or a $C_{1-10}$ hydroxyalkyl group; and $R^2$ and $R^3$ are $C_{1-10}$ hydroxyalkyl groups.

Preferably, $R^2$ and $R^3$, independently are $C_{2-5}$ hydroxyalkyl groups, and $R^1$ is hydrogen, a $C_{1-5}$ alkyl group or a $C_{2-5}$ hydroxyalkyl group. Particularly preferred hydroxyalkyl groups are ß-hydroxyalkyl groups.

Specific examples of suitable alkanolamines are monoethanolamine, diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, aminoethylethanolamine, 3-amino-1,2-propanediol, 2-amino-1,3-propanediol and tris(hydroxymethyl)aminomethane. Diethanolamine is the currently preferred alkanolamine.

Polycarboxylic acid component

The polycarboxylic acid component is generally selected from dicarboxylic, tricarboxylic, tetracarboxylic, pentacarboxylic, and like polycarboxylic acids, anhydrides, salts and combinations thereof.
Preferred polycarboxyl acid components employed as starting materials for reacting with the other binder components are carboxylic anhydrides. The carboxylic anhydride starting material may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.
Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.
In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3.
If appropriate, an additional polycarboxylic acid may be employed in the reaction and is preferably added to the reaction mixture before addition of the anhydride reactant. Specific examples of such additional polycarboxylic acids are adipic acid, aspartic acid, azelaic acid, butane tricarboxylic acid, butan tetracarboxylic acid, citraconic acid, citric acid, fumaric acid, glutaric acid, itaconic acid, maleic acid, malic acid, mesaconic acid, oxalic acid, sebacic acid, succinic acid, tartaric acid and trimesic acid.

Reaction conditions

The reaction between the alkanolamine and polycarboxylic reactants is carried out in the usual manner, for instance, as described in WO 99/36368, WO 01/05725, WO 02/06178, WO 2004/007615 and WO 2006/061249.
The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.
If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.
In the preparation of binder component (1), the proportion of the alkanolamine and polycarboxylic reactants is preferably selected such that the ratio of equivalents of amine plus hydroxy groups (NH+OH) to equivalents of carboxy groups (COOH) is within the range of from 0.4 to 2.0, more preferably 1.0 to 1.8.
In order to improve the water solubility and dilutability of the binder, a base may be added up to a pH of about 8, preferably a pH of between about 5-8, and more preferably a pH of about 6. Furthermore, the addition of a base will cause at least partial neutralization of unreacted acids and a concomittant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia ($NH_3$) and organic amines such as diethanolamine (DEA) and triethanolamine (TEA). The base is preferably added to the reaction mixture after the reaction between the alkanol amine and the carboxylic anhydride has been actively stopped by adding water.

Sugar component

The sugar component (2) employed in accordance with the present invention is preferably selected from sucrose and reducing sugars such as hexoses and pentoses, and mixtures thereof.
A reducing sugar is any sugar that, in solution, has an aldehyde or a ketone group which allows the sugar to act as a reducing agent. In accordance with the present invention, reducing sugars may be used as such or as a

carbohydrate compound that yields one or more reducing sugars in situ under thermal curing conditions. The sugar or carbohydrate compound may be a monosaccharide in its aldose or ketose form, a disaccharide, a triose, a tetrose, a pentose, a hexose, or a heptose; or a di-, oligo- or polysaccharide; or combinations thereof. Specific examples are glucose (= dextrose), starch hydrolysates such as corn syrup, arabinose, xylose, ribose, galactose, mannose, fructose, maltose, lactose and invert sugar. Compounds such as sorbitol and mannitol, on the other hand, which do not contain or supply aldehyde or ketone groups, are less effective in the instant invention.

Crystalline dextrose is normally produced by subjecting an aqueous slurry of starch to hydrolysis by means of heat, acid or enzymes. Depending on the reaction conditions employed in the hydrolysis of starch, a variety of mixtures of glucose and intermediates is obtained which may be characterized by their DE number, DE is an abbreviation for Dextrose Equivalent and is defined as the content of reducing sugars, expressed as the number of grams of anhydrous D-glucose per 100 g of the dry matter in the sample, when determined by the method specified in International Standard ISO 5377-1981 (E). This method measures reducing end groups and attaches a DE of 100 to pure glucose (= dextrose) and a DE of 0 to pure starch.

Only glucose syrup of high DE can crystallise easily and yield a product in powder or granular form. A most popular crystallised product is dextrose monohydrate with application in medicine and chewing tablets. Dextrose monohydrate is pure glucose (DE 100).

With lower DE numbers, the syrup gradually loses its tendency to crystallise. Below approx. 45 DE, the syrup can be concentrated into a stable, non-crystallising liquid, for instance, Standard 42 DE syrup which finds wide spread use in canned fruit preserves, ice cream, bakery products, jam, candy, and all kinds of confectionery.

A preferred sugar component for use in the present invention is a reducing sugar having a dextrose equivalent DE of 40 to 100, preferably 50 to 100, more preferably 86 to 100, and most preferably 90 to 100. Particularly preferred reducing sugar components are dextrose, high DE glucose syrup, high-fructose syrup and mixtures thereof. Commercially available high DE glucose syrups are "Glucose syrup" from Cargill ( DE > 90) and "Sirodex 431" from Syral (DE = 95).

For commercial and practical reasons, dextrose and sucrose are the most preferred sugar components in the present invention.

Urea

Urea is added to the binder composition in the amounts indicated in substance or, preferably, in aqueous solution.

Binder composition

The properties of the final binder composition, such as curing behaviour, durability and moisture take-up are determined by the total ratio of reactive groups present. Therefore, for optimum performance, alkanolamine, polycarboxylic acid or anhydride, sugar component and urea are employed in proportions such that the ratio of total equivalents of amine groups plus hydroxy groups (NH+OH), including amino groups from urea, to equivalents of carboxy groups (COOH) in the binder composition is greater than 2.5, preferably greater than 5, and more preferably greater than 10.

The binder composition according to the present invention preferably has a solids content of from 10 to 40 wt.%. This is often the concentration range of the binder in storage containers before use. In a form ready for application, the binder preferably has a solids content of from 1 to 30 wt.%. For transportation, a solids content of the binder composition of from 60 to 75 wt.% is frequently employed.

In order to achieve adequate application properties and, in particular, spraying properties, the viscosity of the binder composition may be adjusted. This is accomplished, for instance, by controlling the type and concentration of binder components in the aqueous binder system. Viscosity may be kept within the desired ranges e.g. by controlling the molecular weight of binder component (lower reaction temperature, stopping the reaction by adding water at an earlier reaction stage, etc.), and by properly adjusting the relative amounts of the binder components and water solvent.

Additives

The binder compositions according to the present invention may additionally comprise one or more conventional binder additives. These include, for instance, curing accelerators such as, e.g., ß-hydroxyalkylamides; the free acid and salt forms of phosphoric acid, hypophosphorous acid and phosphonic acid. Other strong acids such as boric acid, sulphuric acid, nitric acid and p-toluenesulphonic acid may also be used, either alone or in combination with the just mentioned acids, in particular with phosphoric, hypophosphorous acid or phosphonic acid. Other suitable binder additives are silane coupling agents such as γ-aminopropyltriethoxysilane; thermal stabilizers; UV stabilizers; emulsifiers; surface active agents, particularly nonionic surfactants; biocides; plasticizers; anti-migration aids; coalescents; fillers and extenders such as starch, clay, silicates and magnesium hydroxide; pigments such as titanium dioxide; hydrophobizing agents such as fluorinated compounds, mineral oils and silicone oils and resins; flame retardants; corrosion inhibitors

such as thiourea; antifoaming agents; antioxidants; and others.

These binder additives and adjuvants may be used in conventional amounts generally not exceeding 20 wt.% of the binder solids. The amount of curing accelerator in the binder composition is generally between 0.05 and 5 wt.%, based on solids.

The final aqueous binder composition generally has a solids content of from 1 to 25 wt.% and a pH of 6 or greater.

Mineral fibre product

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a rock wool product.

Suitable fibre formation methods and subsequent production steps for manufacturing the mineral fibre product are those conventional in the art. Generally, the binder is sprayed immediately after fibrillation of the mineral melt on to the airborne mineral fibres. The aqueous binder composition is normally applied in an amount of 0.1 to 10 %, preferably 0.2 to 8 % by weight, of the bonded mineral fibre product on a dry basis.

The spray-coated mineral fibre web is generally cured in a curing oven by means of a hot air stream. The hot air stream may be introduced into the mineral fibre web from below, or above or from alternating directions in distinctive zones in the length direction of the curing oven.

Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the mineral wool web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use, for example, as thermal or acoustical insulation materials, vibration damping, construction materials, facade insulation, reinforcing materials for roofing or flooring applications, as filter stock, as horticultural growing media and in other applications.

In accordance with the present invention, it is also possible to produce composite materials by combining the bonded mineral fibre product with suitable composite layers or laminate layers such as, e.g., metal, glass surfacing mats and other woven or non-woven materials.

The mineral fibre products according to the present invention generally have a density within the range of from 10 to 250 kg/$m^3$, preferably 20 to 200 kg/$m^3$. The mineral fibre products generally have a loss on ignition (LOI) within the range of 0.3 to 12.0 %, preferably 0.5 to 8.0 %.

Although the aqueous binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, moulded articles, coatings etc.

The following examples are intended to further illustrate the invention without limiting its scope. In this application, the solids content (dry matter) is determined at 200 °C, 1 hour and expressed as SC (wt.%). Measuring the SC after exposure to 200°C for 1 hour is a standard method for determining "production-relevant" binder contents which are in direct relationship to the amount of cured binder in the final product (loss on ignition).

**Examples**

Preparation of binder component (1)

158 g of diethanolamine (DEA) are placed in a 1-litre glass reactor provided with a stirrer and a heating/cooling jacket. The temperature of the diethanolamine is raised to 60°C whereafter 91 g of tetrahydrophthalic anhydride (THPA) are added. After raising the temperature and keeping it at 130°C, a second portion of 46 g of tetrahydrophthalic anhydride is added followed by 86 g of trimellitic anhydride (TMA). After reacting at 130°C for 1 hour, the mixture is cooled to 95°C and 210 g of water added and the mixture stirred for 1 hour.

After cooling to ambient temperature, 1% of hypophosphorous acid, 0.5% of a silane (γ-aminopropyltriethoxysilane) and 250 ml/kg solids of ammonia (25%) were added to give Component (1).

Preparation of binder compositions

The binder compositions in Table 1 were made by mixing the components stated in the table in the form of aqueous solutions each adjusted to a solids content (SC) of 20%.

A resulting SC of the mixture of 20% was taken as 100% reaction yield by definition.

Table 1 shows the SC actually measured and the corresponding reaction yields.

Table 1

| Binder No. | Mixing ratio (% SC) | | | SC measured | Reaction yield |
|---|---|---|---|---|---|
| | Comp. 1 | Dextrose | Urea | | |
| 1 | 60% | 0% | 40% | 11,40% | 57% |
| 2 | 40% | 20% | 40% | 13,80% | 69% |
| 3 | 20% | 40% | 40% | 15,10% | 76% |
| 4 | 40% | 0% | 60% | 11,50% | 58% |
| 5 | 20% | 20% | 60% | 13,50% | 68% |
| 6 | 81% | 0% | 19% | 14,12% | 71% |
| 7 | 60% | 20% | 20% | 14,80% | 74% |
| 8 | 40% | 40% | 20% | 15,80% | 79% |
| 9 | 20% | 60% | 20% | 17,10% | 86% |

The results in Table 1 show that the reaction yield of a urea-modified alkanolamine-polycarboxylic binder system is substantially increased when using dextrose as an additional binder component.

<u>Determination of solids content (SC)</u>

In order to determine the amount of non-volatile material that remains after heat treatment for 1 hour at 200°C, a specified amount of material is dried and cured in an incubator. The amount of solids is determined by weighing prior to and after the heat treatment.

Apparatus and Reagents:

Finn-pipette 1-5 ml
Incubator with air circulation 200°C +/- 5°C
Analytical balance, accuracy 0.001 g
Aluminium trays
Disc of mineral wool, annealed at 590°C for 30 minutes, density 80-100 kg/m$^3$, thickness approx. 10 mm, and diameter approx. 50 mm.

Procedure:

Place the mineral wool disc in an aluminium tray. Determine the total weight of tray and wool (M1). Shake the sample before sampling. Suck up 2.5 ml binder in a pipette and distribute it over the mineral wool disc, weigh the disc again (M2). Place the sample in the incubator at 200°C +/- 5°C for one hour. Weigh the sample after a cooling time of 20 minutes (M3). Always perform the determination in duplicate.

Calculation and Expression of results:

Indicate the result as % with 1 decimal. Indicate the result as % of the amount weighed.

$$\text{Non-volatile} = \frac{M3 - M1}{M2 - M1} x100\%$$

Indicate the result as the average value of the duplicate determination. The two individual results may not deviate by more than 0.5% (absolute SC%).

**Claims**

1. An aqueous binder composition for mineral fibres comprising:

   (1) a water-soluble binder component obtainable by reacting at least one alkanolamine with at least one polycarboxylic acid or anhydride and, optionally, treating the reaction product with a base;
   (2) a sugar component; and
   (3) urea

   the proportion of components (1), (2) and (3) being within the range of 10 to 80 wt.% of (1), 15 to 80 wt.% of (2), and 5 to 60 wt.% of (3), based on the solids content of components (1), (2) and (3) as measured after heat treatment for 1 hour at 200°C.

2. The binder composition of claim 1, wherein the alkanolamine is selected from monoethanolamine, diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propane-diol, aminoethylethariolamine and tris-(hydroxymethyl)-aminomethane.

3. The binder composition of claim 1 or 2, wherein the polycarboxylic acid or anhydride is selected from dicarboxylic, tricarboxylic, tetracarboxylic and pentacarboxylic acids and anhydrides, and combinations thereof.

4. The binder composition of claim 3, wherein the polycarboxylic acid or anhydride is selected from at least one of tetrahydrophthalic acid, hexahydrophthalic acid, methyltetrahydrophthalic acid, phthalic acid, methylphthalic acid, trimellitic acid, pyromellitic acid and the corresponding anhydrides.

5. The binder composition of claim 4, wherein the polycarboxylic acid component additionally comprises a polycarboxylic acid selected from adipic acid, aspartic acid, azelaic acid, butane tricarboxylic acid, butane tetracarboxylic acid, citraconic acid, citric acid, fumaric acid, glutaric acid, itaconic acid, maleic acid, malic acid, mesaconic acid, oxalic acid, sebacic acid, succinic acid, tartaric acid and trimesic acid.

6. The binder composition of any one of the preceding claims, wherein the sugar component (2) is selected from sucrose and reducing sugars such as hexoses and pentoses, and mixtures thereof.

7. The binder composition of claim 6, wherein the sugar component (2) is a reducing sugar having a dextrose equivalent (DE) of 40 to 100, preferably 50 to 100, and more preferably 86 to 100.

8. The binder composition of claim 6 or 7, wherein the sugar component (2) is a reducing sugar selected from dextrose, high DE glucose syrup and high-fructose syrup.

9. The binder composition of any one of the preceding claims, wherein the proportion of components (1), (2) and (3) is within the range of 10 to 70 wt.% of (1), 20 to 70 wt.% of (2), and 10 to 40 wt.% of (3), based on the solids content of components (1), (2) and (3) as measured after heat treatment for 1 hour at 200°C.

10. The binder composition of any one of the preceding claims, wherein the proportion of components (1), (2) and (3) is within the range of 20 to 50 wt.% of (1), 30 to 60 wt.% of (2), and 20 to 40 wt.% of (3), based on the solids content of components (1), (2) and (3) as measured after heat treatment for 1 hour at 200°C.

11. The binder composition of any one of the preceding claims, wherein alkanolamine, polycarboxylic acid or anhydride, sugar component and urea are employed in proportions such that the ratio of total equivalents of amine groups plus hydroxy groups (NH+OH), including amino groups from urea, to equivalents of carboxy groups (COOH) in the binder composition is greater than 2.5.

12. A method of producing a bonded mineral fibre product which comprises the steps of contacting the mineral fibres or mineral fibre product with a binder composition according to any one of claims 1 to 11, and curing the binder composition.

13. The method of claim 12 wherein curing is effected at a curing temperature of from about 150°C to about 350°C.

**14.** Mineral fibre product comprising mineral fibres in contact with the cured binder composition according to any one of claims 1 to 11.

## Patentansprüche

**1.** Wässrige Bindemittelzusammensetzung für Mineralfasern, die Folgendes umfasst:

(1) eine wasserlösliche Bindemittelkomponente, die durch Reagierenlassen mindestens eines Alkanolamins mit mindestens einer Polycarbonsäure oder einem Anhydrid und wahlweise Behandeln des Reaktionsproduktes mit einer Base erhalten werden kann;
(2) eine Zuckerkomponente; und
(3) Harnstoff

wobei der Anteil der Komponenten (1), (2) und (3) innerhalb des Bereichs von 10 bis 80 Gew.-% von (1), 15 bis 80 Gew.-% von (2) und 5 bis 60 Gew.-% von (3), basierend auf dem Feststoffgehalt der Komponenten (1), (2) und (3), der nach einer 1-stündigen Wärmebehandlung bei 200 °C gemessen wurde, liegt.

**2.** Bindemittelzusammensetzung nach Anspruch 1, wobei das Alkanolamin aus Monoethanolamin, Diethanolamin, Triethanolamin, Diisopropanolamin, Triisopropanolamin, Methyldiethanolamin, Ethyldiethanolamin, N-Butyldiethanolamine, Methyldiisopropanolamin, Ethylisopropanolamin, Ethyldiisopropanolamine, 3-Amino-Propan-1,2-diol, 2-Amino-Propan-1,3-diol, Aminoethylethanolamin und Tris-(hydroxymethyl)-aminomethan gewählt ist.

**3.** Bindemittelzusammensetzung nach Anspruch 1 oder 2, wobei die Polycarbonsäure oder das Anhydrid aus Dicarbon-, Tricarbon-, Tetracarbon- und Pentacarbonsäuren und Anhydriden und Kombinationen daraus gewählt ist.

**4.** Bindemittelzusammensetzung nach Anspruch 3, wobei die Polycarbonsäure oder deren Anhydrid aus Tetrahydrophthalsäure, Hexahydrophthalsäure, Methyltetrahydrophthalsäure, Phthalsäure, Methylphthalsäure, Trimellitsäure, Pyromellitsäure und/oder den entsprechenden Anhydriden gewählt ist.

**5.** Bindemittelzusammensetzung nach Anspruch 4, wobei die Polycarbonsäurekomponente zusätzlich eine Polycarbonsäure umfasst, die aus Adipinsäure, Asparaginsäure, Azelainsäure, Butantricarbonsäure, Butantetracarbonsäure, Citraconsäure, Citronensäure, Fumarsäure, Glutarsäure, Itaconsäure, Maleinsäure, Äpfelsäure, Mesaconsäure, Oxalsäure, Sebacinsäure, Bernsteinsäure, Weinsäure und Trimesinsäure gewählt ist.

**6.** Bindemittelzusammensetzung nach einem der vorhergehenden Ansprüche, wobei die Zuckerkomponente (2) aus Saccharose und reduzierenden Zuckern, wie Hexosen und Pentosen und Mischungen davon, gewählt ist.

**7.** Bindemittelzusammensetzung nach Anspruch 6, wobei die Zuckerkomponente (2) einem reduzierenden Zucker entspricht, der ein Dextrose-Äquivalent (DE) von 40 bis 100, vorzugsweise 50 bis 100, und insbesondere 86 bis 100, aufweist.

**8.** Bindemittelzusammensetzung nach Anspruch 6 oder 7, wobei die Zuckerkomponente (2) einem reduzierenden Zucker entspricht, der aus Dextrose, Glukosesirup mit hohem DE und einem Sirup mit hohem Fruktosegehalt ausgewählt wird.

**9.** Bindemittelzusammensetzung nach einem der vorhergehenden Ansprüche, wobei der Anteil der Komponenten (1), (2) und (3) innerhalb des Bereichs von 10 bis 70 Gew.-% von (1), 20 bis 70 Gew.-% von (2) und 10 bis 40 Gew.-% von (3) basierend auf dem Feststoffgehalt der Komponenten (1), (2) und (3), der nach einer 1-stündigen Wärmebehandlung bei 200 °C gemessen wurde, liegt.

**10.** Bindemittelzusammensetzung nach einem der vorhergehenden Ansprüche, wobei der Anteil der Komponenten (1), (2) und (3) innerhalb des Bereichs von 20 bis 50 Gew.-% von (1), 30 bis 60 Gew.-% von (2) und 20 bis 40 Gew.-% von (3) basierend auf dem Feststoffgehalt der Komponenten (1), (2) und (3), der nach einer 1-stündigen Wärmebehandlung bei 200 °C gemessen wurde, liegt.

**11.** Bindemittelzusammensetzung nach einem der vorhergehenden Ansprüche, wobei Alkanolamin, Polycarbonsäure oder Anhydrid, Zuckerkomponente und Harnstoff in derartigen Anteilen eingesetzt werden, dass das Verhältnis der

Gesamtäquivalente der Amin-Gruppen plus Hydroxy-Gruppe (NH+OH), einschließlich Amino-Gruppen von Harnstoff, zu den Äquivalenten der CarboxyGruppe (COOH) in der Bindemittelzusammensetzung größer als 2,5 ist.

**12.** Verfahren zum Herstellen eines gebundenen Mineralfaserprodukts, das die Schritte des in Kontakt bringens der Mineralfasern oder des Mineralfaserprodukts mit einer Bindemittelzusammensetzung nach einem der Ansprüche 1 bis 11 und das Aushärten der Bindemittelzusammensetzung umfasst.

**13.** Verfahren nach Anspruch 12, wobei das Aushärten bei einer Aushärtungstemperatur von etwa 150 °C bis etwa 350 °C erfolgt.

**14.** Mineralfaserprodukt, das Mineralfasern umfasst, die mit der ausgehärteten Bindemittelzusammensetzung nach einem der Ansprüche 1 bis 11 in Kontakt sind.

## Revendications

**1.** Composition aqueuse de liant pour fibres minérales, comprenant :

(1) un constituant hydrosoluble servant de liant pouvant être obtenu par réaction d'au moins une alcanolamine avec au moins un acide ou anhydride polycarboxylique et, facultativement, traitement du produit de réaction avec une base ;
(2) un constituant du type sucre ; et
(3) de l'urée

les proportions des constituants (1), (2) et (3) étant comprises dans les intervalles de 10 à 80 % en poids de (1), 15 à 80 % en poids de (2) et 5 à 60 % en poids de (3), sur la base de la teneur en matières solides des constituants (1), (2) et (3) telle que mesurée après traitement thermique pendant 1 heure à 200°C.

**2.** Composition de liant suivant la revendication 1, dans laquelle l'alcanolamine est choisie entre la monoéthanolamine, la diéthanolamine, la triéthanolamine, la diisopropanolamine, la triisopropanolamine, la méthyldiéthanolamine, l'éthyldiéthanolamine, la n- butyldiéthanolamine, la méthyldiisopropanolamine, l'éthylisopropanolamine, l'éthyldiisopropanolamine, le 3-amino-1,2-propanediol, le 2-amino-1,3-propanediol, l'aminoéthyléthanolamine et le tris-(hydroxyméthyl)-aminométhane.

**3.** Composition de liant suivant la revendication 1 ou 2, dans laquelle l'acide ou l'anhydride polycarboxylique est choisi entre des acides et anhydrides dicarboxyliques, tricarboxyliques, tétracarboxyliques et pentacarboxyliques et leurs associations.

**4.** Composition de liant suivant la revendication 3, dans laquelle l'acide ou l'anhydride polycarboxylique est choisi entre au moins un de l'acide tétrahydrophtalique, de l'acide hexahydrophtalique, de l'acide méthyltétrahydro-phtalique, de l'acide phtalique, de l'acide méthylphtalique, de l'acide trimellitique et de l'acide pyromellitique et les anhydrides correspondants.

**5.** Composition de liant suivant la revendication 4, dans laquelle le constituant du type acide polycarboxylique comprend en outre un acide polycarboxylique choisi entre l'acide adipique, l'acide aspartique, l'acide azélaïque, l'acide butanetricarboxylique, l'acide butane- tétracarboxylique, l'acide citraconique, l'acide citrique, l'acide fumarique, l'acide glutarique, l'acide itaconique, l'acide maléique, l'acide malique, l'acide mésaconique, l'acide oxalique, l'acide sébacique, l'acide succinique, l'acide tartrique et l'acide trimésique.

**6.** Composition de liant suivant l'une quelconque des revendications précédentes, dans laquelle le constituant du type sucre (2) est choisi entre le saccharose et des sucres réducteurs tels que des hexoses et des pentoses ainsi que leurs mélanges.

**7.** Composition de liant suivant la revendication 6, dans laquelle le constituant du type sucre (2) est un sucre réducteur ayant un équivalent en dextrose (DE) de 40 à 100, avantageusement de 50 à 100, et plus avantageusement de 86 à 100.

**8.** Composition de liant suivant la revendication 6 ou 7, dans laquelle le constituant du type sucre (2) est un sucre

réducteur choisi entre le dextrose, le sirop de glucose à haut DE et le sirop à haute teneur en fructose.

**9.** Composition de liant suivant l'une quelconque des revendications précédentes, dans laquelle les proportions des constituants (1), (2) et (3) sont comprises dans les intervalles de 10 à 70 % en poids de (1), de 20 à 70 % en poids de (2) et de 10 à 40 % en poids de (3), sur la base de la teneur en matières solides des constituants (1), (2) et (3) telle que mesurée après traitement thermique pendant 1 heure à 200°C.

**10.** Composition de liant suivant l'une quelconque des revendications précédentes, dans laquelle les proportions des constituants (1), (2) et (3) sont comprises dans les intervalles de 20 à 50 % en poids de (1), de 30 à 60 % en poids de (2) et de 20 à 40 % en poids de (3), sur la base de la teneur en matières solides des constituants (1), (2) et (3) telle que mesurée après traitement thermique pendant 1 heure à 200°C.

**11.** Composition de liant suivant l'une quelconque des revendications précédentes, dans laquelle l'alcanolamine, l'acide ou l'anhydride polycarboxylique, le constituant du type sucre et l'urée sont utilisés en des proportions telles que le rapport des équivalents totaux de groupes amine plus groupes hydroxy (NH+OH), y compris les groupes amino de l'urée, aux équivalents de groupes carboxy (COOH) dans la composition de liant soit supérieur à 2,5.

**12.** Procédé pour la fabrication d'un produit à base de fibres minérales liées, qui comprend les étapes de mise en contact des fibres minérales ou du produit à base de fibres minérales avec une composition de liant suivant l'une quelconque des revendications 1 à 11, et le durcissement de la composition de liant.

**13.** Procédé suivant la revendication 12, dans lequel le durcissement est effectué à une température de durcissement d'environ 150°C à environ 350°C.

**14.** Produit à base de fibres minérales, comprenant des fibres minérales en contact avec la composition de liant durcie suivant l'une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 583086 A
- EP 990727 A
- EP 1741726 A
- US 5318990 A
- US 20070173588 A
- WO 9936368 A
- WO 0105725 A
- WO 0196460 A
- WO 0206178 A
- WO 2004007615 A
- WO 2006061249 A
- WO 2008023032 A